(19) Europäisches Patentamt
European Patent Office
Office européen des brevets

(11) **EP 2 620 890 A1**

(12) **EUROPEAN PATENT APPLICATION**

(43) Date of publication:
**31.07.2013 Bulletin 2013/31**

(51) Int Cl.:
*G06F 21/00* (2013.01)　　*H04L 9/06* (2006.01)

(21) Application number: **12305092.4**

(22) Date of filing: **25.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Gemalto SA**
**92190 Meudon (FR)**

(72) Inventors:
• **Villegas, Karine**
**92190 MEUDON (FR)**
• **Pahaut, Olivier**
**92190 MEUDON (FR)**

(54) **Method for detecting a fault injected in hardware registers of an electronic device**

(57) The present invention relates to a cryptographic method (M) for detecting a fault injected in hardware registers (reg) of a processor in a secured electronic device used for computing a cryptographic algorithm (P) using a secret element (Se) and a second element (a), said hardware registers (reg) being used for the computation of another first function (f), said method comprising the steps of:
- loading said secret element (Se) and said second element (a) in said hardware registers (reg) ;
- applying at least one operation of said cryptographic algorithm (P) using said loaded secret element (Se) and said loaded second element (a) to generate a first cryptographic output result (rc1) ;
- applying said first function (f) using said loaded secret element (Se) and said loaded second element (a) to generate a first intermediate result (rs1) ;
- applying a function (g) using said cryptographic output result (rc1) and said first intermediate result (rs1) to generate a second intermediate result (rs2);
- loading a transform of said secret element ($Se_T$) and a transform of said second element (aT) in said hardware registers (reg) ;
- applying said first function (f) on the loaded transform of said secret element ($Se_T$) and on the loaded transform of said second element (aT) to generate a third intermediate result (rs3) to verify that the function (g) applied on said first cryptographic output (rc1), said second intermediate result (rs2) and said third intermediate result (rs3) is equal to the first cryptographic output (rc1) ;
- applying said function (g) using said second intermediate result (rs2) and said third intermediate result (rs3) to generate a fourth intermediate result (rs4) ;
- comparing said first cryptographic output result (rc1) and said fourth intermediate result (rs4) ;
- if said comparison operation failed, applying a countermeasure on the secured electronic device so that no equipment accesses the first cryptographic output result (rc1).

FIG. 1

## Description

## TECHNICAL FIELD

The present invention relates to a cryptographic method for detecting a fault injected in hardware registers of a processor in an electronic device used for computing a cryptographic algorithm using a secret element and a second element.

The invention also relates to an electronic device for carrying out said method.

Such a method may be used in a non-limitative example in smart cards which are used for exchanging reliable data with a terminal.

## BACKGROUND OF THE INVENTION

Cryptographic methods based on cryptographic algorithms are usually used for exchanging reliable data. They are embedded in a secure electronic device, such as a smart card. Symmetric cryptographic algorithms, such as for example the AES algorithm, use a secret element which is a same key to cipher/decipher a second element which is a message and asymmetric cryptographic algorithms, such as for example the ECDSA algorithm, use a secret element which is a private key to sign a message and a public key to verify said signature for example. The private key and the message are stored in hardware registers of the electronic device for the computation.

A problem of this state of the art is even if the cryptographic method is embedded in a secure electronic device, such as a smart card, an attacker may perform Differential Fault Analysis "DFA" attacks on the smart card to extract the data which is the secret key element. A DFA attack is based on the analysis of faulty results got from the smart card from which the attacker wants to find the secret. The faults are injected when the smart card executes the different cryptographic operations required during deciphering for example.

An attacker may inject a fault in the hardware registers to modify the values of the secret element and/or of the second element stored within said hardware registers and knowing one or several faulty output results of the cryptographic algorithm, the attacker may with the DFA analysis recover the secret element. As one can't have access to the hardware registers, one can't verify the integrity of elements stored in hardware registers. Thus, one can't apply a countermeasure to prevent an attacker to exploit the faulty output result.

## SUMMARY OF THE INVENTION

It is an object of the invention to provide a cryptographic method for detecting a fault injected in hardware registers of an electronic device's processor used for computing a cryptographic algorithm using a secret element and a second element to prevent such DFA attacks.

It is to be noted that DFA attacks are well-known by the man skilled in the art.

To this end, there is provided a cryptographic method for detecting a fault injected in hardware registers of a processor in a secured electronic device used for computing a cryptographic algorithm using a secret element and a second element, said hardware registers being used for the computation of a first function, said method comprising the steps of :

- loading said secret element and said second element in said hardware registers ;
- applying at least one operation of said cryptographic algorithm using said loaded secret element and said loaded second element to generate a first cryptographic output result ;
- applying said first function using said loaded secret element and said loaded second element to generate a first intermediate result ;
- applying a function using said cryptographic output result and said first intermediate result to generate a second intermediate result;
- loading a transform of said secret element and a transform of said second element in said hardware registers ;
- applying said first function on the loaded transform of said secret element and on the loaded transform of said second element to generate a third intermediate result to verify that the function applied on said first cryptographic output, said second intermediate result and said third intermediate result is equal to the first cryptographic output ;
- applying said function using said second intermediate result and said third intermediate result to generate a fourth intermediate result ;
- comparing said first cryptographic output result and said fourth intermediate result;
- if said comparison operation failed, applying a countermeasure on the secured electronic device so that no equipment accesses the first cryptographic output result.

As we will see in further details, the cryptographic method proposes to exploit a specific algebraic or /and arithmetic property, for example the complementation, of another process that shares some hardware registers with the cryptographic algorithm to detect a fault injected during the execution of said cryptographic algorithm and to apply a countermeasure in consequence. For example, in case of using the complementation property: as the result of a process which has a complementation property applied on a secret element and on a second element is equal to the complement of the result of said process applied on the complement of said secret element and said second element, applying exclusive or operation with 2's complement, one may verify if both results are equal. If it is not the case, one may conclude that the hardware registers have been corrupted.

In a first non-limitative embodiment, the cryptographic algorithm is the AES algorithm, the secret element is a secret key and the second element is a message.

According to this first non-limitative embodiment, the method comprises the further steps of:

- loading the secret element and said fourth intermediate result in hardware registers;
- compute the inverse of the cryptographic algorithm on said loaded fourth intermediate result with said loaded secret element to generate a second cryptographic output result ;
- comparing said second cryptographic output result with said message ;
- if the comparison failed, applying a countermeasure on the electronic device so that no equipment accesses the first cryptographic output result.

In a second non-limitative embodiment, the operation of the cryptographic algorithm is the modular operation of the ECDSA algorithm, the secret element is a private key and the second element is a value computed by the ECDSA algorithm prior to the modular operation.

In a non-limitative embodiment, the process comprises a complementation property and is the triple DES algorithm and the function is the exclusive or Boolean operation.

In another non-limitative embodiment, the process comprises a complementation property and is the exclusive or Boolean operation and the function is the exclusive or Boolean operation.

In another non-limitative embodiment, the process comprises an inversion property and is the multiplication by one operation and the function is the multiplication by one operation.

In a non-limitative embodiment,

- the step of applying said function using said cryptographic output result and said first intermediate result further used a random value (to generate said second intermediate result ;
- the step of applying said function using said second intermediate result and said third intermediate result further used the transform of said random value to generate said fourth intermediate result.

In addition, there is provided a secured electronic device for detecting a fault injected in hardware registers of said electronic device's processor used for computing a cryptographic algorithm using a secret element and a second element, said hardware registers being used for the computation of another process, said secured electronic device's processor being adapted to:

- loading said secret element and said second element in said hardware registers ;

- applying at least one operation of said cryptographic algorithm using said loaded secret element and said loaded second element to generate a first cryptographic output result ;
- applying said process using said loaded secret element and said loaded second element to generate a first intermediate result ;
- applying a function using said cryptographic output result and said first intermediate result to generate a second intermediate result;
- loading a transform of said secret element and a transform of said second element in said hardware registers ;
- applying said process on the loaded transform of said secret element and on the loaded transform of said second element to generate a third intermediate result to verify that the function applied on said first cryptographic output, said second intermediate result and said third intermediate result is equal to the first cryptographic output;
- applying said function using said second intermediate result and said third intermediate result to generate a fourth intermediate result ;
- comparing said first cryptographic output result and said fourth intermediate result ;
- if said comparison operation failed, applying a countermeasure on the secured electronic device so that no equipment accesses the first cryptographic output result.

In addition, there is provided a non transitory computer readable medium comprising a computer program product comprising a set of instructions, which when loaded into said secured electronic device, causes the secured electronic device to carry out the cryptographic method as characterized according to any above characteristics.

**BRIEF DESCRIPTION OF THE FIGURES**

Some embodiments of methods and/or apparatus in accordance with embodiments of the present invention are now described, by way of example only, and with reference to the accompanying drawings, in which:

- Fig.1 illustrates a schematic organization chart of the steps of the cryptographic method for detecting a fault injected;
- Fig.2 illustrates a schematic organization chart of the steps of the cryptographic method of Fig. 1 which comprises further steps;
- Fig.3 illustrates a schematic organization chart of the cryptographic method of Fig. 2 applied for an AES algorithm;
- Fig.4 illustrates a schematic organization chart of the cryptographic method of Fig. 2 applied for an ECDSA algorithm in a first variant of embodiment;

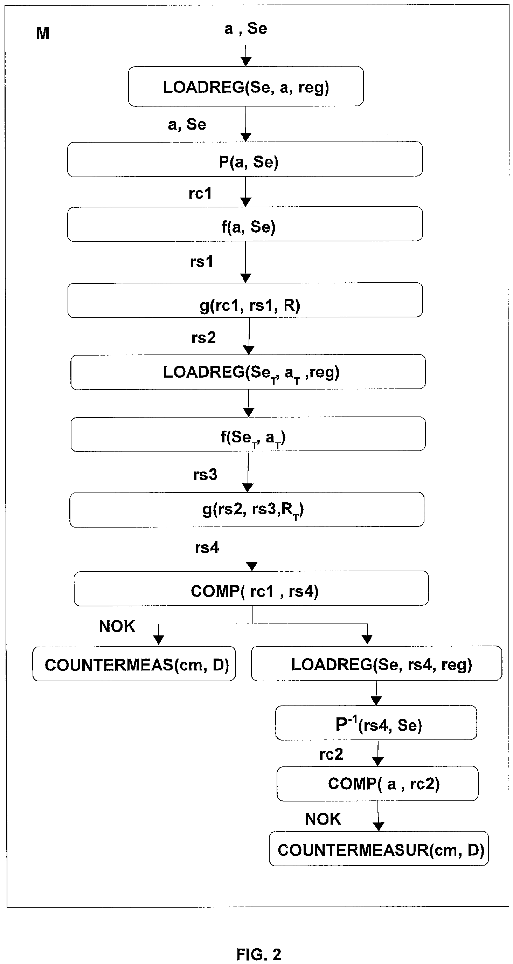

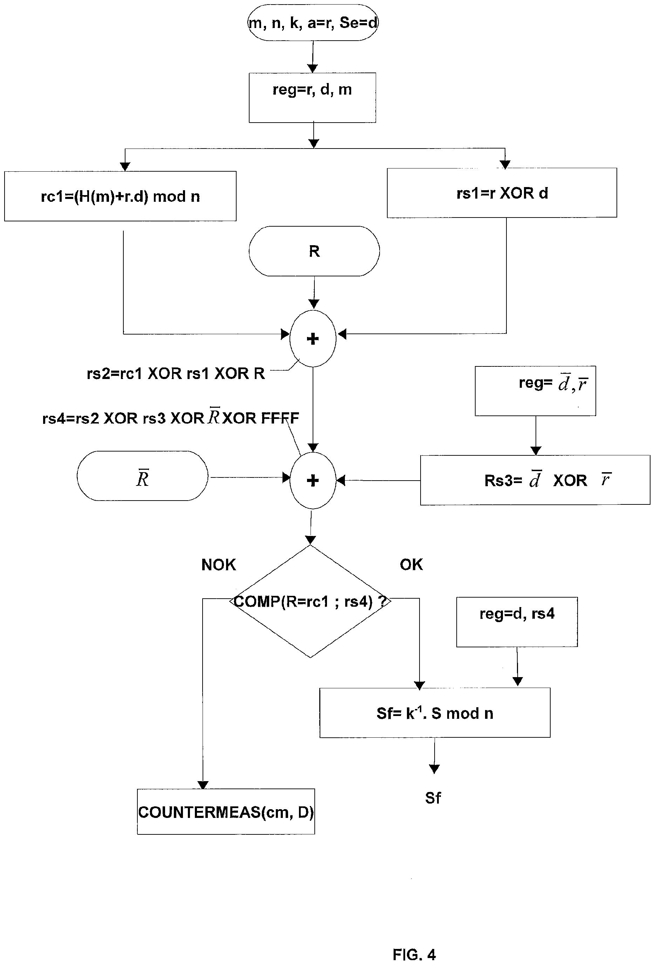

- Fig.4 illustrates a schematic organization chart of the cryptographic method of Fig. 2 applied for an ECDSA algorithm in a second variant of embodiment; and

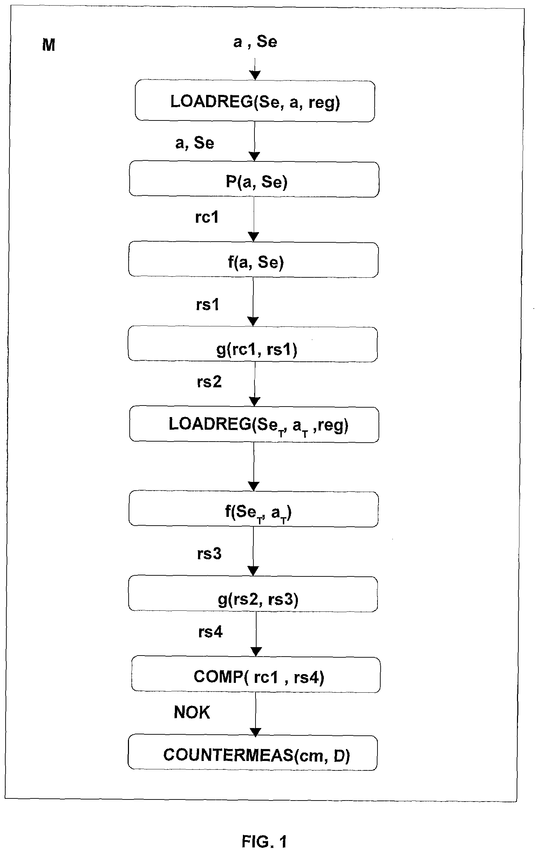

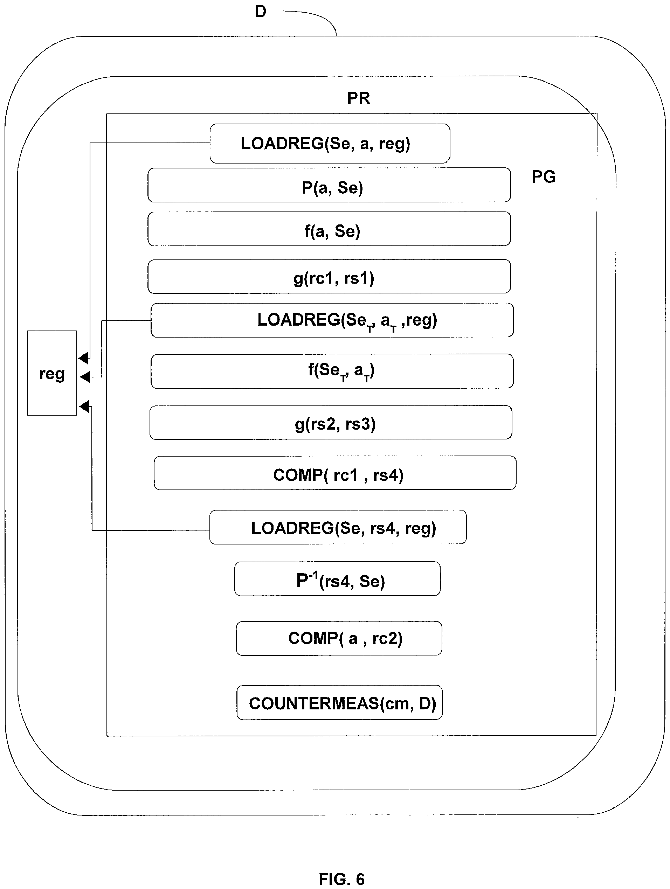

- Fig.6 illustrates schematically an electronic device which is adapted to carry out the method of Fig. 1 to Fig. 5.

DESCRIPTION OF EMBODIMENTS OF THE INVENTION

In the following description, well-known functions or constructions by the man skilled in the art are not described in detail since they would obscure the invention in unnecessary detail.

The present invention relates to a cryptographic method M for detecting a fault injected in hardware registers reg of a processor PR in a secured electronic device D used for computing a cryptographic algorithm P using a secret element Se and a second element a, said hardware registers reg being used for the computation of a first function f.

Said method comprises the following steps with reference to Fig. 1 to 5.

**In a first step 1),** one loads said secret element Se and said second element a in said hardware registers reg (illustrated LOADREG(Se, a, reg) in Fig. 1 and in Fig. 2).

It is to be noted that the secret element Se and the second element a are stored in a non volatile memory such as an EEPROM. For the computation of the cryptographic algorithm P, they are loaded in hardware registers reg.

**In a second step 2)**, one applies at least one operation of said cryptographic algorithm P using said loaded secret element Se and said loaded second element a to generate a first cryptographic output result rc1 (illustrated P(a, Se) in Fig. 1 and in Fig. 2).

It is to be noted that in a non-limitative embodiment, the cryptographic output result rc1 is composed of a plurality of bytes.

**In a third step 3),** one applies said first function f using said loaded secret element Se and said loaded second element a to generate a first intermediate result rs1 (illustrated f(a, Se) in Fig. 1 and in Fig. 2).

It is to be noted that said step and the previous step 2) may be performed in parallel or in a reverse order. The intermediate result rs1 is composed of a plurality of bytes.

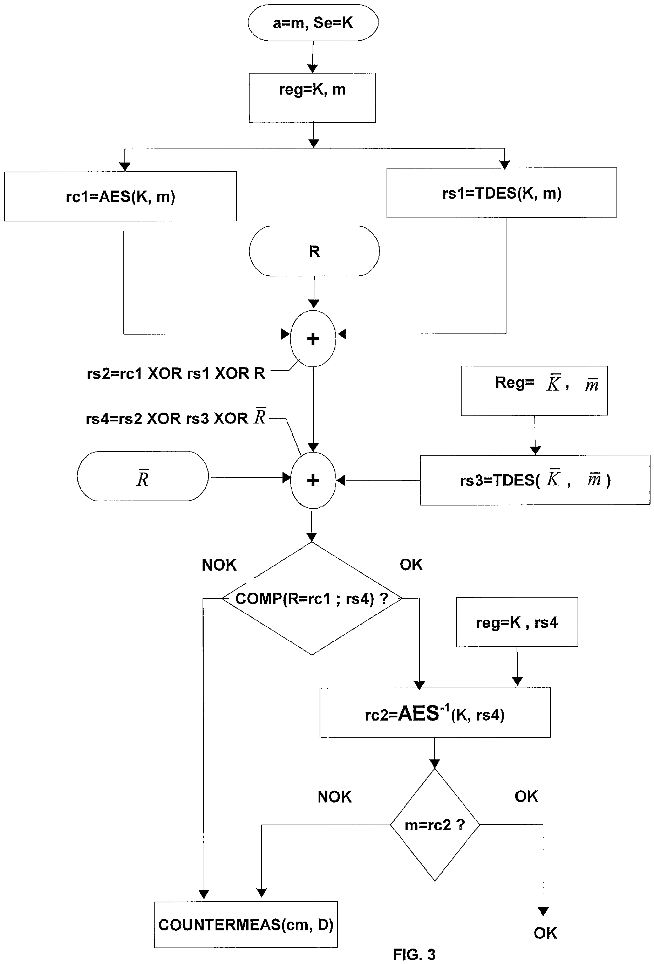

In a first non-limitative embodiment illustrated in Fig. 3, the first function f comprises a complementation property cp and is the triple DES algorithm.

In a second non-limitative embodiment illustrated in Fig. 4, the first function f comprises a complementation property cp and is the exclusive or Boolean operation XOR.

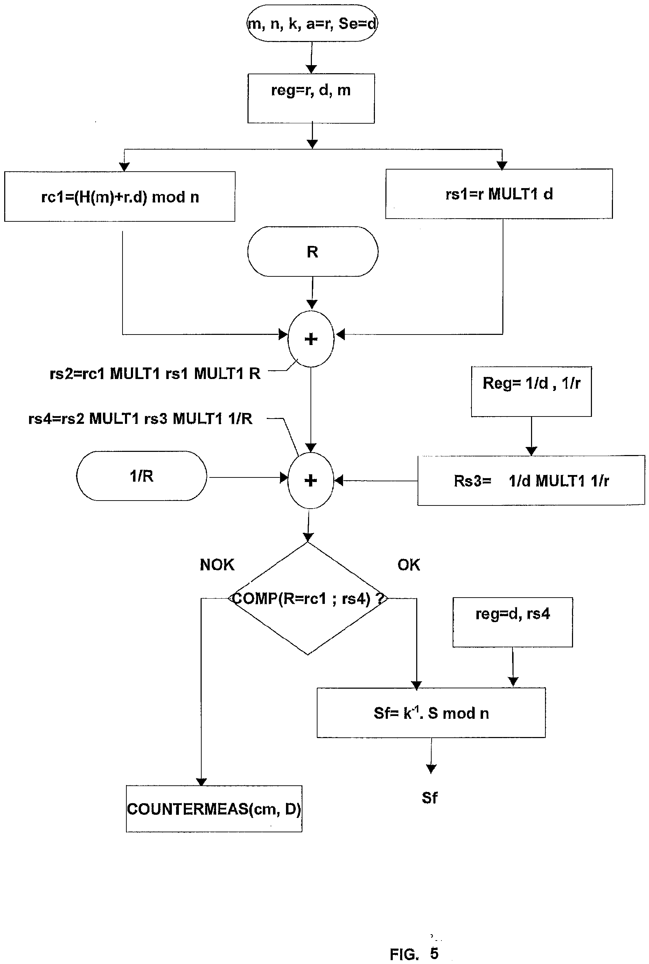

In a third non-limitative embodiment illustrated in Fig. 5, the first function f comprises an inversion property cp and is the multiplication by one operation MULT1.

Those embodiments will be described in detailed later on.

**In a fourth step 4),** one applies a second function g using said cryptographic output result rc1 and said first intermediate result rs1 to generate a second intermediate result rs2 (illustrated g(rc1, rs1) in Fig. 1 and in Fig. 2).

Therefore, rs2 = g(rc1,rs1). The intermediate result rs2 is composed of a plurality of bytes.

In the first non-limitative embodiment and in the second non-limitative embodiment in Fig. 3 and in Fig. 4 respectively, where the property cp is a complementation property cp, the second function g is the exclusive or Boolean operation XOR.

Therefore, rs2 = rc1 XOR rs1.

It is to be reminded that a complementation property cp is expressed by the fact that the result of a function applied on a value (composed of bytes) is equal to the complement of the result of the same function applied on the complement of said value (composed of bytes). Therefore, by xoring the result and its complement result, the result will be FF... FF (corresponding bytes number).

In the third non-limitative embodiment illustrated in Fig. 5 where the property cp is an inversion property cp, the second function g is the multiplication by one operation MULT1.

Therefore, rs2 = rc1 MULT1 rs1.

It is to be reminded that a inversion property cp is expressed by the fact that the result of a function applied on a value (composed of bytes) is equal to the inverse of the result of the same function applied on the inverse of said value (composed of bytes). Therefore, by multiplying the result and its inverse result by one, the resulting bytes will be 1.

In a non-limitative embodiment, the step of applying said second function g using said cryptographic output result rc1 and said first intermediate result rs1 further used a random value R to generate said second intermediate result rs2 (illustrated g(rc1, rs1, R) in Fig. 2).

Therefore, rs2 = rc1 g rs1 g R.

For the first embodiment and for the second embodiment, rs2 = rc1 XOR rs1 XOR R.

For the third embodiment, rs2 = rc1 MULT1 rs1 MULT1 R.

It is to be noted that the use of a random value R permits the value of the first cryptographic output result rc1 and the value of the second intermediate result rs2 and therefore the fourth intermediate result rs4 (described below) to change at each execution of the cryptographic algorithm P. Therefore, the outputs of said operation of the cryptographic algorithm P to which an attacker have access always varies. An attacker won't be able to use these values to perform statistical analysis. The random value R is used as a mask to mask the first cryptographic output result rc1 to an attacker.

It is to be noted that said random value R is stored in a random access memory RAM as well as the second intermediate result rs2=rc1 XOR rs1 XOR R, and rc1 XOR R.

With the following steps, one uses the second function g and the property cp of the first function f to verify the integrity of said hardware registers reg.

**In a fifth step 5),** one loads a transform of said secret element $Se_T$ and a transform of said second element $a_T$ in said hardware registers reg (illustrated LOADREG($Se_T$,$a_T$, reg) in Fig. 1 and in Fig. 2).

The former values within said hardware registers reg (i.e. Se and a) are therefore erased. It is to be noted that the secret element Se and the second element a which are used to compute the transform $Se_T$ and $a_T$ are those stored in the EEPROM, and therefore are the correct ones which have not been corrupted. The transforms $Se_T$ and $a_T$ are therefore values not corrupted.

In the first embodiment and in the second embodiment illustrated in Fig. 3 and in Fig. 4 respectively, the transform is a complement value. Therefore, one loads the complement of said secret element $\overline{Se}$ and the complement of said second element a in said hardware registers reg (illustrated LOADREG($\overline{Se}$, $\overline{a}$, reg)).

In the third embodiment illustrated in Fig. 5, the transform is an inverse value. Therefore, one loads the inverse of said secret element 1/Se and the inverse of said second element 1/a in said hardware registers reg (illustrated LOADREG(1/Se,1/a, reg)).

**In a sixth step 6)**, one applies said first function f on the loaded transform of said secret element $Se_T$ and on the loaded transform of said second element $a_T$ to generate a third intermediate result rs3 (illustrated f($Se_T$, $a_T$) illustrated in Fig. 1 and in Fig. 2) to verify that the second function g applied on said first cryptographic output rc1, said second intermediate result rs2 and on said third intermediate result rs3 is equal to the first cryptographic output rc1.

This step permits to verify the identity Id of the second function g on the first argument of said second function g, that is to say on the cryptographic algorithm P applied on the secret element Se and on the second element a.

The intermediate result rs3 is composed of a plurality of bytes.

In the first embodiment, the triple DES is applied on the loaded complement of said secret element $\overline{Se}$ and on the loaded complement of said second element $\overline{a}$ to generate a third intermediate result rs3 (illustrated TDES ($\overline{a}$, $\overline{Se}$) in Fig. 3).

In the second embodiment, the exclusive or Boolean operation XOR is applied on the loaded complement of said secret element $\overline{Se}$ and on the loaded complement of said second element $\overline{a}$ to generate a third intermediate result rs3 (illustrated XOR($\overline{a}$, $\overline{Se}$) in Fig. 4).

In the third embodiment, the multiplication by one operation MULT1 is applied on the loaded inverse of said secret element 1/Se and on the loaded inverse of said second element 1/a to generate a third intermediate result rs3 (illustrated MULT1(1/a, 1/Se) in Fig. 5).

**In a seventh step 7),** one applies said second function g using said second intermediate result rs2 and said third intermediate result rs3 to generate a fourth intermediate result rs4(illustrated g(rs2, rs3) in Fig. 1 and in Fig. 2).

.It is equivalent to apply said second function g on said first cryptographic output rc1, said first intermediate result rs1 and on said third intermediate result rs3.

In a non-limitative embodiment, the step of applying said second function g using said second intermediate result rs2 and said third intermediate result rs3 further used the transform of said random value $R_T$ to generate said fourth intermediate result rs4 (illustrated g (rs2, rs3,$R_T$) in Fig. 2).

In the first embodiment and in the second embodiment illustrated in Fig. 3 and in Fig. 4 respectively, where the second function g is the exclusive or Boolean operation XOR, one applies said exclusive or Boolean operation XOR on said second intermediate result rs2 and said third intermediate result rs3 to generate a fourth intermediate result rs4.

Therefore, rs4 = rs2 XOR rs3 = rc1 XOR rs1 XOR rs3.

In a non-limitative embodiment, the step of applying said second function g using said second intermediate result rs2 and said third intermediate result rs3 further used the complement of said random value $\overline{R}$ to generate said fourth intermediate result rs4 (illustrated XOR (rs2, rs3, $\overline{R}$)).

Therefore, rs4 = rs2 XOR rs3 XOR $\overline{R}$ = rc1 XOR rs1 XOR R XOR rs3 XOR $\overline{R}$, with R XOR $\overline{R}$ = FFFF.

In the second embodiment where the second function g is the multiplication by one operation MULT1, one applies said multiplication on said second intermediate result rs2 and said third intermediate result rs3 to generate a fourth intermediate result rs4.

Therefore, rs4 = rs2 MULT1 rs3 = rc1 MULT1 rs1 MULT1 rs3.

In a non-limitative embodiment, the step of applying said second function g using said second intermediate result rs2 and said third intermediate result rs3 further used the inverse of said random value 1/R to generate said fourth intermediate result rs4 (illustrated MULT1 (rs2, rs3, 1/R)).

Therefore, rs4 = rs2 MULT1 rs3 MULT1 1/R= rc1 MULT1 rs1 MULT1 R MULT1 rs3 MULT1 1/R, with R MULT1 1/R= 1.

**In a eight step 8),** one compares said first cryptographic output result rc1 and said fourth intermediate result rs4 (illustrated COMP(rc1, rs4)).

If the hardware registers reg have not been corrupted, that is to say, the value of the secret element Se and/or the value of the second element a have not been modified, the term rs1 g rs3 should be resulting in all the bits of the set to 0 (for the first embodiment and the second embodiment where g = XOR) and to 1 (for the third embodiment where g = MULT1) and the fourth result rs4 should be equal to the first cryptographic output result rc1.

It is to be noted that the alteration of the hardware registers reg may be performed by an attacker when loading the secret element Se and the second element a in said hardware registers (during step 1 or during step 5) and/or when the operation of the cryptographic algorithm P is computed (during step 2).

Therefore, if said secret element Se and said second element a are corrupted in said hardware registers, their loaded values in step 1 will be different from the one stored in the EEPROM and serving as a basis for loading their complements or their inverses in step 5.

Therefore, the first intermediate value rs1 issued from the computation of the first function f with the loaded secret element Se and from the second element a (at step 1), and the third intermediate value rs3 issued from the computation of the first function f with the loaded transform secret element $Se_T$ and from the loaded transform second element $a_T$ (at step 6) won't be equal.

Therefore g(rs1, rs3) will not be correct in case of fault injection, in cases described equal to 0 or FF... FF.

And therefore, the comparison of the fourth intermediate result rs4 with the first cryptographic output result rc1 won't lead to the expected result.

**In a ninth step 9)**, if said comparison operation failed (illustrated NOK in Fig. 1 and in Fig. 2), one applies a countermeasure on the electronic device D so that no equipment accesses the first cryptographic output result rc1(illustrated COUNTERMEAS(cm, D)). Such a countermeasure cm may be in non-limitative examples to kill the electronic device D or to dismute the electronic device D.

Therefore, with these steps, it is possible to check if some modifications have been made within the hardware registers reg comprising the secret element Se and the second element a and see if they have been corrupted by an attack, and this without accessing to said hardware registers.

An attacker won't have access to the first cryptographic output result rc1, and won't be able to perform DFA attacks to recover the secret element Se from a faulty first cryptographic output result rc1.

Hence, the cryptographic method permits to verify that g(P(Se, a), f(Se, a); f($Se_T$, aT)) = P(Se, a) i.e. g(rc1, rs2, rs3) = rc1. The identity Id of the second function g is verified on the first argument P(Se, a) when there is no fault injected and therefore when no hardware registers reg have been corrupted.

In a non-limitative embodiment, the cryptographic method M comprises the further steps of (illustrated in Fig. 2):

**10)** loading the secret element Se and said fourth intermediate result rs4 in hardware registers reg (illustrated LOADREG(Se, rs4, reg)).

The former value within said hardware registers reg ($Se_T$ i.e. $\overline{Se}$ or 1/Se) is therefore erased. It is to be noted that the secret element Se is the one stored in the EEPROM, and therefore is the correct one which have not been corrupted.

**11)** compute the inverse of the cryptographic algorithm $P^{-1}$ on said loaded fourth intermediate result rs4 with said loaded secret element Se to generate a second cryptographic output result rc2 (illustrated $P^{-4}$(rs4, Se)).

**12)** comparing said second cryptographic output result rc2 with said second element a (illustrated COMP(a, rc2)).

**13)** if said comparison operation failed (illustrated NOK in Fig. 2), applying a countermeasure cm on the electronic device D so that no equipment accesses the first cryptographic output result rc1 (illustrated COUNTERMEAS(cm, D)).

Such a countermeasure cm may be in non-limitative examples to kill the electronic device D or to dismute the electronic device D.

It is to be noted that these further steps are performed if said first comparison between the first cryptographic output result rc1 and the fourth intermediate result rs4 failed or not.

With these further steps, it is possible to check if the operation of the cryptographic algorithm P has been corrupted during its execution or if the operation has been well executed.

Indeed, for example, if the loaded secret element Se has been altered (because of an attack on the hardware registers reg containing said loaded secret element Se) before the execution of the operation of said cryptographic algorithm P with said loaded secret element Se, the first cryptographic output result rc1 will be also altered. For example the bit number 3 of said secret element Se was initially set to 1 and has been modified to 0 instead of 1 in the hardware register reg.

If one compute the inverse operation of the cryptographic algorithm $P^{-1}$ with said altered first cryptographic output result rc1 and with said altered secret element Se, this will leads to a second cryptographic output result rc2 which will be equal to said altered first cryptographic output result rc1 and therefore the comparison will lead to a valid result although the result was altered. Therefore, no countermeasure will be applied. This leads to the same result if only the operation of the cryptographic algorithm itself is corrupted by an attack.

With the further steps described, instead of taking as an input the altered first cryptographic output result rc1 for the inverse operation $P^{-1}$, one takes as an input the fourth intermediate result rs4. As explained before, said result rs4 takes into account the loaded secret element Se, the second element a (which both may be altered), the correct loaded complement secret element $\overline{Se}$ and loaded complement second element $\overline{a}$ (bits number 3 equal to 0) in the example given. Therefore, while applying the inverse operation $P^{-1}$ on said result rs4, as said fourth intermediate result rs4 will not be coherent with the cryptographic output result rc1, the resulting second cryptographic output result rc2 will be different from the second element a, if the secret element Se, the second element a and/or the operation itself P has been altered.

It is to be noted that all these steps 1 to 11 are performed by a unit processor of the secured electronic device D which is programmed accordingly.

The cryptographic method M will be better understood with some illustrated applications in figure 3 and in figure 4.

The applications illustrated take into account the random value R of the second embodiment above described.

● Underline: First application

This first application is illustrated in Fig. 3.

In a non-limitative embodiment illustrated in figure 3, all the operations of the cryptographic algorithm P are applied and the cryptographic algorithm P is the AES algorithm.

The AES algorithm is a symmetric algorithm which uses a secret element Se which is a secret key K to cipher and decipher a message m, the message m being the second element a.

The AES algorithm being well-known by the man skilled in the art, it won't be described here.

In a non-limitative embodiment, the first function f comprises a complementation property cp and is the triple DES algorithm.

The second function g is the exclusive or Boolean operation XOR.

The triple DES algorithm noted TDES comprises a complementation property cp as the result of TDES $(K,m)$ is equal to complement of the result of TDES$(\overline{K}, \overline{m})$. Therefore, xoring the result of TDES$(K,m)$ and the complement of the result of TDES$(\overline{K}, \overline{m})$ will lead to FFFF.

If the hardware registers are not altered, one will have XOR (AES(K, m); TDES(K, m); TDES$(\overline{K}, \overline{m})$) = AES(K, m).

The embodiment of the cryptographic method M described hereinafter comprises the use of the random value R.

As illustrated, the cryptographic method M comprises the steps of:

1) loading said key K and said message m in said hardware registers reg (reg=K, m).

2) applying said AES algorithm using said loaded key K and said loaded message m to generate a ciphered message rc1.

3) applying said triple DES comprising a complementation property cp using said loaded key K and said loaded message m to generate a first intermediate result rs1.

4) xoring said ciphered message rc1, said first intermediate result rs1 and a random value R to generate a second intermediate result rs2 (rs2 = rc1 XOR rs1 XOR R).

5) loading the complement of said key $\overline{K}$ and the complement of said message $\overline{m}$ in said hardware registers reg (reg= $\overline{K}$, $\overline{m}$).

6) applying said triple DES with the loaded complement of said key $\overline{K}$ and on the loaded complement message m to generate a third intermediate result rs3.

7) xoring said second intermediate result rs2 and said third intermediate result rs3 and the complement of said random value $\overline{R}$ to generate a fourth intermediate result rs4. Therefore, rs4 = rs2 XOR rs3 XOR $\overline{R}$ = rc1 XOR rs1 XOR R XOR rs3 XOR $\overline{R}$.

It is to be noted that rs1 XOR rs3 should be resulting in FF....FF (2s complement. Therefore rs4 = rc1 XOR FF... FF XOR R XOR $\overline{R}$ with R XOR $\overline{R}$ = FF... FF, and rc1 XOR 0 = rc1.

8) comparing said ciphered message rc1 and said fourth intermediate result rs4. If no fault has been injected, i.e. the message m and/or the key K has not been altered by an attack in the hardware registers reg, the fourth result rs4 should be equal to the ciphered message rc1.

9) if said comparison operation failed, i.e. in this case, if said ciphered message rc1 and said fourth intermediate result rs4 are different, applying a countermeasure cm on the electronic device D so that no equipment accesses the first cryptographic output result rc1.

It is to be noted that the term R XOR $\overline{R}$ = FF...FF permits to "annul" the term rs1 XOR rs3 if this later is equal to FF... FF, as FF... FF XOR FF...FF = 0.

The cryptographic method M further comprises the steps of:

10) loading the key K and said fourth intermediate result rs4 in said hardware registers reg (reg=K, rs4) ;

11) compute the inverse of the AES algorithm AES$^{-1}$ on said loaded fourth intermediate result rs4 with said loaded key K to generate a deciphered message rc2;

12) comparing said deciphered message rc2 with said message m;

13) if said comparison operation failed, i.e. here, if said message m and said deciphered message rc2 are different, applying a countermeasure cm on the electronic device D so that no equipment accesses the ciphered message rc1.

If said message m and said deciphered message rc2 are equal, sending a message to acknowledge that the message m is valid.

● <u>Second application</u>

In a non-limitative embodiment illustrated in figure 5, the operation of the cryptographic algorithm P is the modular operation of the ECDSA algorithm. Said modular operation is the sensitive operation which takes into account the secret element Se. This is the reason why one has to protect said modular operation from the attacks.

The ECDSA algorithm is an asymmetric algorithm which uses a secret element Se which is a secret key d and public elements which are the public key, n the order of the elliptic curve used.

○ *First variant*

This variant is illustrated in Fig. 4.

In a first non-limitative variant of embodiment, the first function f comprises a complementation property cp and is the exclusive or Boolean operation XOR. The second function g is the exclusive or Boolean operation XOR.

The exclusive or Boolean operation comprises a complementation property cp as the result of $XOR(d, r)$ is equal to complement of the result of $XOR(\overline{d}, \overline{r})$. Therefore, xoring the result of $XOR(d,r)$ and the complement of the result of $XOR(\overline{d}, \overline{r})$ will lead to FF...FF.

If the hardware registers are not altered, one will have XOR (ECDSA(d,r) ; XOR(d, r) ; $XOR(\overline{d}, \overline{r})$) = ECDSA(d, r).

When signing a message m with said algorithm, a signature of the message is computed with the private key d at a transmitter side such as a smart card for example. The signature is verified at a receiver side with the public key.

The ECDSA algorithm comprises a plurality of operations including:

- computation of a first value r, which is the second element a. It is to be noted that a random value k is used to computed said signature ;
- execution of the modular operation to output the cryptographic output result rc1 using a hashing function H.

The ECDSA algorithm being well-known by the man skilled in the art, it won't be described here.

The embodiment of the cryptographic method M described hereinafter comprises the use of the random value R.

As illustrated, the cryptographic method M comprises the steps of:

1) loading said private key d and said value r in said hardware registers reg (reg= d, r).
It is to be noted that the message m, the order n, the random value k are also loaded in the hardware registers reg during the execution of said modular operation.

2) applying said ECDSA modular operation using said loaded private key d and said value r to generate a signature rc1=(H(m)+ r.d) mod n.

3) applying the exclusive or Boolean operation XOR comprising a complementation property cp using said loaded private key d and said loaded value r to generate a first intermediate result rs1 (rs1 = d XOR r).

4) xoring said signature rc1, said first intermediate result rs1 and a random value R to generate a second intermediate result rs2 (rs2 = rc1 XOR rs1 XOR R = rc1 XOR d XOR r XOR R).

5) loading the complement of said private key $\overline{d}$ and the complement of said value $\overline{r}$ in said hardware registers reg (reg= $\overline{d}$, $\overline{r}$ ).

6) applying said exclusive or Boolean operation XOR on the loaded complement of said private key $\overline{d}$ and on said loaded complement of said value $\overline{r}$ to generate a third intermediate result rs3 (rs3 = $\overline{d}$ XOR $\overline{r}$).

7) xoring said second intermediate result rs2, said third intermediate result rs3 and the complement of said random value $\overline{R}$ to generate a fourth intermediate result rs4. Therefore, rs4 = rs2 XOR rs3 XOR R = rc1 XOR rs1 XOR R XOR rs3 XOR $\overline{R}$.
It is to be noted that rs1 XOR rs3 should be resulting of all the bits set to 0; therefore rs4 = rc1 XOR 0 XOR R XOR $\overline{R}$ with R XOR $\overline{R}$ = FF...FF.

8) comparing said signature rc1 and said fourth intermediate result rs4. If no fault has been injected, i.e. the value r and/or the private key d, r has not been altered by an attack, the fourth result rs4 should be equal to the signature rc1.

9) if said comparison operation failed, i.e. here if said signature rc1 and said fourth intermediate result rs4 are different from FF... FF, applying a countermeasure cm on the electronic device D so that no equipment accesses the signature rc1.

Of course, one may xoring the result rs4 with FF... FF so that the comparison is based on a difference between said new result rs4 and the signature rc1.

The term R XOR $\overline{R}$ = FF... FF will be "annulled" with another FF... FF as FF... FF XOR FF... FF = 0.

The cryptographic method M further comprises the steps of if the comparison succeeds:

10) computing a final signature Sf being equal to k-1. S mod n.

Therefore, if no fault has been injected in the hardware registers reg, one output the final signature Sf, said final signature being sent subsequently from the electronic device D to a receiver with the message m so that said receiver verify the final signature Sf.

○ *Second variant*

This variant is illustrated in Fig. 5.

In a second non-limitative variant of embodiment, the first function f comprising an inversion property cp and is the multiplication by one operation MULT1.

The second function g is the multiplication by one operation MULT1.

The multiplication by one operation comprises an inversion property cp as the result of MULT1 (d,r) is equal to the inverse of the result of MULT1 (1/d , 1/r). Therefore, multiplying by one the result of MULT1(d,r) and the inverse of the result of MULT1(1/d , 1/r) will lead to 1.

If the hardware registers are not altered, one will have MULT1 (ECDSA(d,r) ; MULT1(d, r) ; MULT1 (1/d ,1/r)) = ECDSA(d, r).

When signing a message m with said algorithm, a signature of the message is computed with the private key d at a transmitter side such as a smart card for example. The signature is verified at a receiver side with the public key.

The ECDSA algorithm comprises a plurality of operations including:

- computation of a first value r, which is the second element a. It is to be noted that a random value k is used to computed said first value r ;
- execution of the modular operation to output the cryptographic output result rc1 using a hashing function H.

The ECDSA algorithm being well-known by the man skilled in the art, it won't be described here.

The embodiment of the cryptographic method M described hereinafter comprises the use of the random value R.

As illustrated, the cryptographic method M comprises the steps of:

1) loading said private key d and said value r in said hardware registers reg (reg= d, r).

It is to be noted that the message m, the level n, the random value k are also loaded in the hardware registers reg either during the execution of said modular operation.

2) applying said ECDSA modular operation using said loaded private key d and said value r to generate a signature rc1==(H(m), + r.d) mod n.

3) applying the multiplication by one operation MULT1 comprising an inversion property cp using said loaded private key d and said loaded value r to generate a first intermediate result rs1 (rs1 = d MULT1 r).

4) multiply said signature rc1, said first intermediate result rs1 and a random value R to generate a second intermediate result rs2 (rs2 = rc1 MULT1 rs1 MULT1 R = rc1 MULT1 d MULT1 r MULT1 R).

5) loading the inverse of said private key 1/d and the inverse of said value 1/r in said hardware registers reg (reg= 1/d , 1/r).

6) applying said multiplication by one operation MULT1 on the loaded inverse of said private key 1/d and on said loaded inverse of said value 1/r to generate a third intermediate result rs3

$$(rs3 = \frac{1}{d \times r}).$$

7) applying said multiplication by one operation MULT1 on said second intermediate result rs2, said third intermediate result rs3 and the inverse of said random value 1/R to generate a fourth intermediate result rs4. Therefore, rs4 = rs2 MULT1 rs3 MULT1 R = rc1 MULT1 rs1 MULT1 R MULT1 rs3 MULT1 1/R. It is to be noted that rs1 MULT1 rs3 should be resulting value equal to 1; therefore rs4 = rc1 MULT1 R MULT1 1/R.

8) comparing said signature rc1 and said fourth intermediate result rs4. If no fault has been injected, i.e. the value r and/or the private key d, r has not been altered by an attack, the fourth result rs4 should be equal to the signature rc1.

9) if said comparison operation failed, i.e. here if said signature rc1 and said fourth intermediate result rs4 are different, applying a countermeasure cm on the electronic device D so that no equipment accesses the signature rc1.

The cryptographic method M further comprises the steps of, if the comparison succeeds:

10) computing a final signature Sf being equal to k-1.Smod n.

Therefore, if no fault has been injected in the hardware registers reg, one output the final signature Sf, said final signature being sent subsequently from the electronic device D to a receiver with the message m so that said receiver verify the final signature Sf.

Hence, with this cryptographic method, one may check if the hardware registers used for executing the cryptographic algorithm have been modified or not.

The cryptographic method M is carried out by an electronic device D as illustrated in Fig. 5. Said electronic device D may be any cryptographic system adapted to performed cryptographic computations. In a non-limitative example, said electronic device is a smart card. The secured electronic device D comprises the hardware registers reg and a unit processor PR.

Said electronic device D for detecting a fault injected in hardware registers reg of a processor PR in an electronic device D used for computing a cryptographic algorithm P using a secret element Se and a second element a, said hardware registers reg being used for the computation of another first function f, said electronic device's D processor PR being adapted to:

- loading said secret element Se and a second element a in said hardware registers reg ;
- applying at least one operation of said cryptographic algorithm P using said loaded secret element Se and said loaded second element a to generate a first cryptographic output result rc1 ;
- applying said first function f using said loaded secret element Se and said loaded second element a to generate a first intermediate result rs1 ;
- applying a second function g using said cryptographic output result rc1 and said first intermediate result rs1 to generate a second intermediate result rs2;
- loading a transform of said secret element $Se_T$ and a transform of said second element $a_T$ in said hardware registers reg ;
- applying said first function f on the loaded transform of said secret element $Se_T$ and on the loaded transform of said second element $a_T$ to generate a third intermediate result rs3 to verify that the second function g applied on said first cryptographic output rc1, said second intermediate result rs2 and said third intermediate result rs3 is equal to the first cryptographic output rc1 ;
- applying said second function g using said second intermediate result rs2 and said third intermediate result rs3 to generate a fourth intermediate result rs4 ;
- comparing said first cryptographic output result rc1 and said fourth intermediate result rs4 ;
- if said comparison operation failed, applying a countermeasure on the secured electronic device D so that no equipment accesses the first cryptographic output result rc1.

Hence, the unit processor PR is programmed accordingly to perform these steps.

The functions of the various elements shown in the Fig. 6, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, application specific integrated circuit (ASIC), field programmable gate array (FPGA), read only memory (ROM) for storing software, and non volatile storage. Other hardware, conventional and/or custom, may also be included.

A person of skill in the art would readily recognize that steps of the above-described method can be performed by programmed secured electronic devices.

Herein, some embodiments are also intended to cover a non transitory computer readable medium comprising a computer program product PG comprising a set of instructions, which when loaded into said secured electronic device D, causes the secured electronic device to carry out the cryptographic method M.

The computer readable medium may be, in non-limitative examples, digital memories, magnetic storage media such as a magnetic disks and magnetic tapes, hard drives, or optically readable digital data storage media.

Hence, some embodiments of the invention may comprise one or a plurality of the following advantages:

- it is easy to implement ;
- it can be implemented within all processors using same hardware registers for executing an operation of a cryptographic algorithm and a process;
- it guaranties that the hardware registers have not been modified without accessing to them, and therefore it guaranties that the secret element and the second element have not been altered ;
- it prevent an attacker to access to a faulty output result and thus to perform further his analysis to recover the secret element ;
- it guaranties that the execution of the cryptographic algorithm has not been altered ;
- no additional RAM is needed compared to a classic execution of the cryptographic algorithm P.

**Claims**

1. Cryptographic method (M) for detecting a fault injected in hardware registers (reg) of a processor (PR) in a secured electronic device (D) used for computing a cryptographic algorithm (P) using a secret element (Se) and a second element (a), said hardware registers (reg) being used for the computation of a first function (f), said method comprising the steps of :

   - loading said secret element (Se) and said second element (a) in said hardware registers (reg) ;
   - applying at least one operation of said cryptographic algorithm (P) using said loaded secret element (Se) and said loaded second element (a) to generate a first cryptographic output result (rc1) ;
   - applying said first function (f) using said loaded secret element (Se) and said loaded second element (a) to generate a first intermediate result (rs1) ;
   - applying a second function (g) using said cryptographic output result (rc1) and said first intermediate result (rs1) to generate a second intermediate result (rs2);

- loading a transform of said secret element ($Se_T$) and a transform of said second element ($a_T$) in said hardware registers (reg) ;
- applying said first function (f) on the loaded transform of said secret element ($Se_T$) and on the loaded transform of said second element ($a_T$) to generate a third intermediate result (rs3) to verify that the function (g) applied on said first cryptographic output (rc1), said second intermediate result (rs2) and said third intermediate result (rs3) is equal to the first cryptographic output (rc1) ;
- applying said function (g) using said second intermediate result (rs2) and said third intermediate result (rs3) to generate a fourth intermediate result (rs4) ;
- comparing said first cryptographic output result (rc1) and said fourth intermediate result (rs4) ;
- if said comparison operation failed, applying a countermeasure on the secured electronic device (D) so that no equipment accesses the first cryptographic output result (rc1).

**2.** Cryptographic method (M) as claimed in any one of the previous claims, wherein the cryptographic algorithm (P) is the AES algorithm, the secret element (Se) is a secret key (K) and the second element (a) is a message (m).

**3.** Cryptographic method (M) as claimed in the preceding claim, wherein it comprises the further steps of:

- loading the secret element (Se) and said fourth intermediate result (rs4) in hardware registers (reg) ;
- compute the inverse of the cryptographic algorithm ($P^{-1}$) on said loaded fourth intermediate result (rs4) with said loaded secret element (Se) to generate a second cryptographic output result (rc2) ;
- comparing said second cryptographic output result (rc2) with said message (m) ;
- if the comparison failed, applying a countermeasure on the electronic device (D) so that no equipment accesses the first cryptographic output result (rc1).

**4.** Cryptographic method (M) as claimed in any one of the previous claims, wherein the operation of the cryptographic algorithm (P) is the modular operation of the ECDSA algorithm, the secret element (Se) is a private key (d) and the second element (a) is a value (r) computed by the ECDSA algorithm prior to the modular operation.

**5.** Cryptographic method (M) as claimed in any one of the previous claims, wherein the first function (f) comprises a complementation property (cp) and is the triple DES algorithm and the function (g) is the exclusive or Boolean operation (XOR).

**6.** Cryptographic method (M) as claimed in any one of the previous claims 1 to 4, wherein the first function (f) comprises a complementation property (cp) and is the exclusive or Boolean operation (XOR) and the function (g) is the exclusive or Boolean operation (XOR).

**7.** Cryptographic method (M) as claimed in any one of the previous claims 1 to 4, wherein the first function (f) comprises an inversion property (cp) and is the multiplication by one operation (MULT1) and the function (g) is the multiplication by one operation (MULT1).

**8.** Cryptographic method (M) as claimed in any one of the previous claims, wherein

- the step of applying said function (g) using said cryptographic output result (rc1) and said first intermediate result (rs1) further used a random value (R) to generate said second intermediate result (rs2) ;
- the step of applying said function (g) using said second intermediate result (rs2) and said third intermediate result (rs3) further used the transform of said random value ($R_T$) to generate said fourth intermediate result (rs4).

**9.** A secured electronic device (D) for detecting a fault injected in hardware registers (reg) of said electronic device's (D) processor (PR) used for computing a cryptographic algorithm (P) using a secret element (Se) and a second element (a), said hardware registers (reg) being used for the computation of a first function (f), said secured electronic device's (D) processor (PR) being adapted to :

- loading said secret element (Se) and said second element (a) in said hardware registers (reg) ;
- applying at least one operation of said cryptographic algorithm (P) using said loaded secret element (Se) and said loaded second element (a) to generate a first cryptographic output result (rc1) ;
- applying said first function (f) using said loaded secret element (Se) and said loaded second element (a) to generate a first intermediate result (rs1) ;
- applying a function (g) using said cryptographic output result (rc1) and said first intermediate result (rs1) to generate a second intermediate result (rs2);
- loading a transform of said secret element ($Se_T$) and a transform of said second element (aT) in said hardware registers (reg) ;
- applying said first function (f) on the loaded transform of said secret element ($Se_T$) and on the loaded transform of said second element (aT) to generate a third intermediate result (rs3) to verify that the function (g) applied on said first cryptographic output (rc1), said second intermediate result (rs2) and said third intermediate result (rs3) is equal to the first cryptographic output (rc1) ;
- applying said function (g) using said second intermediate result (rs2) and said third intermediate result (rs3) to generate a fourth intermediate result (rs4) ;
- comparing said first cryptographic output result (rc1) and said fourth intermediate result (rs4) ;
- if said comparison operation failed, applying a countermeasure on the secured electronic device (D) so that no equipment accesses the first cryptographic output result (rc1).

10. A non transitory computer readable medium comprising a computer program product (PG) comprising a set of instructions, which when loaded into said secured electronic device (D), causes the secured electronic device to carry out the cryptographic method as claimed in any one of claims 1 to 9.

M

a , Se

LOADREG(Se, a, reg)

a, Se

P(a, Se)

rc1

f(a, Se)

rs1

g(rc1, rs1)

rs2

LOADREG(Se$_T$, a$_T$ ,reg)

f(Se$_T$, a$_T$)

rs3

g(rs2, rs3)

rs4

COMP( rc1 , rs4)

NOK

COUNTERMEAS(cm, D)

FIG. 1

M

a , Se

↓

LOADREG(Se, a, reg)

a, Se ↓

P(a, Se)

rc1 ↓

f(a, Se)

rs1 ↓

g(rc1, rs1, R)

rs2 ↓

LOADREG($Se_T$, $a_T$, reg)

↓

f($Se_T$, $a_T$)

rs3 ↓

g(rs2, rs3, $R_T$)

rs4 ↓

COMP( rc1 , rs4)

NOK

COUNTERMEAS(cm, D)      LOADREG(Se, rs4, reg)

↓

$P^{-1}$(rs4, Se)

rc2 ↓

COMP( a , rc2)

NOK ↓

COUNTERMEASUR(cm, D)

**FIG. 2**

FIG. 3

$$m, n, k, a=r, Se=d$$

$$reg=r, d, m$$

$$rc1=(H(m)+r.d) \bmod n$$

$$rs1=r \text{ XOR } d$$

R

$+$

rs2=rc1 XOR rs1 XOR R

$$reg= \overline{d}, \overline{r}$$

rs4=rs2 XOR rs3 XOR $\overline{R}$ XOR FFFF

$\overline{R}$

$+$

$$Rs3= \overline{d} \text{ XOR } \overline{r}$$

NOK          OK

COMP(R=rc1 ; rs4) ?

reg=d, rs4

$$Sf= k^{-1} . S \bmod n$$

COUNTERMEAS(cm, D)

Sf

**FIG. 4**

FIG. 5

D

PR

LOADREG(Se, a, reg)

PG

P(a, Se)

f(a, Se)

g(rc1, rs1)

LOADREG(Se$_T$, a$_T$ ,reg)

f(Se$_T$, a$_T$)

g(rs2, rs3)

COMP( rc1 , rs4)

LOADREG(Se, rs4, reg)

P$^{-1}$(rs4, Se)

COMP( a , rc2)

COUNTERMEAS(cm, D)

reg

FIG. 6

Europäisches
Patentamt

European
Patent Office

Office européen
des brevets

# EUROPEAN SEARCH REPORT

**Application Number**

EP 12 30 5092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAGAI BAR-EL ET AL: "The Sorcerer's Apprentice Guide to Fault Attacks", INTERNET CITATION, 7 May 2004 (2004-05-07), XP002329915, Retrieved from the Internet: URL:http://web.archive.org/web/20041016071 838/eprint.iacr.org/2004/100 [retrieved on 2005-05-27] * Section 5 Secion 9 * | 1-10 | INV. G06F21/00 H04L9/06 |
| X | EP 1 569 118 A2 (GIESECKE & DEVRIENT GMBH [DE]) 31 August 2005 (2005-08-31) * abstract * * figure 1 * * paragraphs [0015] - [0021] * | 1-10 | |
| X | EP 2 180 631 A1 (GEMALTO SA [FR]) 28 April 2010 (2010-04-28) * abstract * * paragraph [0021] * | 1-10 | |
| A | Jean-Sebastien Coron; Louis Goubin: "On Boolean and Arithmetic Masking against Diff erential Power Analysis" In: "CHESS 200", 2000, Springer, XP055021582, vol. 1965 * Section 4 * | 8 | TECHNICAL FIELDS SEARCHED (IPC) G06F H04L |

-/--

The present search report has been drawn up for all claims

| Place of search | Date of completion of the search | Examiner |
|---|---|---|
| The Hague | 20 April 2012 | Schäfer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches
Patentamt
European
Patent Office
Office européen
des brevets

Application Number

EP 12 30 5092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUILLAUME FUMAROLI ET AL: "Blinded Fault Resistant Exponentiation", 1 January 2006 (2006-01-01), FAULT DIAGNOSIS AND TOLERANCE IN CRYPTOGRAPHY LECTURE NOTES IN COMPUTER SCIENCE;;LNCS, SPRINGER, BERLIN, DE, PAGE(S) 62 - 70, XP019045570, ISBN: 978-3-540-46250-7 * Section 2 Section 3 * | 8 | |
| A | WO 01/31422 A2 (VON WILLICH MANFRED [ZA]) 3 May 2001 (2001-05-03) * abstract * * figure 6 * | 8 | |

TECHNICAL FIELDS
SEARCHED      (IPC)

The present search report has been drawn up for all claims

| Place of search | Date of completion of the search | Examiner |
|---|---|---|
| The Hague | 20 April 2012 | Schäfer, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 12 30 5092

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2012

| Patent document cited in search report | | Publication date | Patent family member(s) | | Publication date |
|---|---|---|---|---|---|
| EP 1569118 | A2 | 31-08-2005 | AT | 412216 T | 15-11-2008 |
| | | | DE | 102004008901 A1 | 15-09-2005 |
| | | | EP | 1569118 A2 | 31-08-2005 |
| | | | ES | 2311888 T3 | 16-02-2009 |
| EP 2180631 | A1 | 28-04-2010 | EP | 2180631 A1 | 28-04-2010 |
| | | | EP | 2351286 A1 | 03-08-2011 |
| | | | JP | 2012506658 A | 15-03-2012 |
| | | | KR | 20110088509 A | 03-08-2011 |
| | | | US | 2011274268 A1 | 10-11-2011 |
| | | | WO | 2010046251 A1 | 29-04-2010 |
| WO 0131422 | A2 | 03-05-2001 | AU | 773982 B2 | 10-06-2004 |
| | | | AU | 2301401 A | 08-05-2001 |
| | | | CA | 2388971 A1 | 03-05-2001 |
| | | | CN | 1413398 A | 23-04-2003 |
| | | | EP | 1226681 A2 | 31-07-2002 |
| | | | JP | 2003513490 A | 08-04-2003 |
| | | | WO | 0131422 A2 | 03-05-2001 |
| | | | ZA | 200202798 A | 23-09-2003 |

EPO FORM P0459

For more details about this annex : see Official Journal of the European Patent Office, No. 12/82